# EUROPÄISCHE PATENTSCHRIFT

(11) **EP 3 370 316 B1**
(45) Veröffentlichungstag und Bekanntmachung des Hinweises auf die Patenterteilung: **01.12.2021**
(21) Anmeldenummer: 18159558.8
(22) Anmeldetag: 01.03.2018
(51) Int. Cl.: H02G 3/12

(54) **INSTALLATIONSDOSE MIT MAGNETHALTERUNG**
INSTALLATION BOX WITH MAGNETIC HOLDER
BOÎTIER À SUPPORT MAGNÉTIQUE

(30) Priorität: 03.03.2017 DE 102017104524
(43) Veröffentlichungstag der Anmeldung: 05.09.2018
(73) Patentinhaber: Kaiser GmbH & Co. KG, 58579 Schalksmühle (DE)
(72) Erfinder: KAISER, Burkard, 58509 Lüdenscheid (DE)
(74) Vertreter: Rentsch Partner AG

(56) Entgegenhaltungen:
- EP-A2- 1 848 080
- CH-A1- 707 700
- CH-A2- 706 106
- DE-A1- 4 220 720
- GB-A- 1 111 607
- US-A- 5 456 373
- US-A1- 2008 190 638

## Beschreibung

### TECHNISCHES GEBIET

Die Erfindung betrifft eine Installationsdose für elektrische Anschlüsse.

### HINTERGRUND DER ERFINDUNG

In Bauwerken werden für das Anbringen elektrischer Schalter, Steckdosen, Lampen, Apparate oder für Verzweigungen an den dazu vorgesehenen Stellen im Gebäude Installationsdosen verwendet, welche häufig einbetoniert werden. Unter Installationsdosen werden beispielsweise Einlasskästen, Deckendübel, Unterputzdosen, Verteilerdosen und dergleichen verstanden. Solche Installationsdosen weisen typischerweise ein zylinder- oder quaderförmiges Gehäuse mit Boden auf, welche einen über eine Installationsöffnung zugänglichen Installationsraum ausbilden. Umfangsseitig in der Seitenwand oder im Boden weisen sie zudem oft eine Mehrzahl von Muffen und Adaptern auf, welche typischerweise zur Befestigung von Plastikrohren, insbesondere Wellrohren, zur Durchführung von Anschlusskabeln vorgesehen sind.

Der Einbau der Installationsdose in einer Betonoberfläche (Wände, Decken, Böden) erfolgt vor dem Betonieren. Herkömmliche Installationsdosen werden beispielsweise mit Nägeln oder mittels Heisskleber derart an einem Schalungselement befestigt, dass ihre Installationsöffnung der Schalung zugewandt ist. Weiterhin sind Lösungen bekannt, bei denen die Installationsdosen mittels Magneten an der Metallschalung der Betonwand befestigt werden können. Dies ist vorteilhaft, da die Position der Installationsdose auch nach der initialen Befestigung noch leicht wieder veränderbar ist.

Aus dem Stand der Technik sind Installationsdosen bekannt, welche grössere Permanentmagneten in der Dose verbaut haben. Diese können in der Dose selbst oder in einem Deckel der Dose, welcher typischerweise die Installationsöffnung der Installationsdose vor dem Eindringen von flüssigem Beton schützt, angebracht sein. In der Vergangenheit wurden diese Magnete zunächst vorzugsweise so eingebettet, dass diese nach dem Giessen des Betons aus Kostengründen wiederverwendet werden konnten. Bespiele für eine solche Technologie sind z.B. die EP1848080B1 oder die DE4220720A1. Wo entweder nur der Magnet oder dieser gemeinsam mit einer dafür vorgesehenen Haltevorrichtung wiederverwendet werden kann.

In den letzten Jahren sind jedoch immer kleinere und leistungsfähigere Magneten zu günstigeren Preisen auf den Markt gekommen. Dies hatte zur Folge, dass magnetische Installationsdosen bekannt geworden sind, welche Magneten in der Dose verbaut haben, die nicht explizit zur Wiederverwendung gedacht sind. So hat beispielsweise Morach am 15.09.2014 das Schutzrecht CH707700 publiziert, welches eine solche magnetische Installationsvorrichtung offenbart, die mindestens eine Dose und mindestens einen Deckel aufweist. Der Deckel weist mindestens einen Permanentmagneten zur temporären Befestigung der Installationsvorrichtung an einer Metallschalung auf. Weiter weist die Installationsvorrichtung eine Sicherungsverbindung auf, welche eine lösbare Verbindung zwischen der Dose dem Deckel herstellt, wobei die Sicherungsverbindung dazu eingerichtet ist, einerseits bei einem Einbetonieren und einem Ausschalen die Dose mit dem Deckel verbunden zu halten und andererseits eine Trennbarkeit von Dose und Deckel zu gewährleisten.

Weitergehend publizierte Herbert Wintersteiger am 09.06.2016 das Gebrauchsmuster DE202016101962U1. Dieses zeigt ein Elektroinstallationsgehäuse zur Aufnahme einer elektrotechnischen Einrichtung in einem Betonteil. Das Gehäuse umfasst einen Gehäusekörper mit einem Aufnahmeraum für die elektrotechnische Einrichtung und einen Deckel mit welchem der Gehäusekörper frontseitig verschliessbar ist. Das Gehäuse ist an einer metallischen Schalungswand, welche zur Herstellung des Betonteils gedacht ist, mittels mindestens eines Magneten befestigbar. Der Magnet ist derart im frontseitigen Deckel oder in einem frontseitigen Endbereich des Gehäusekörpers form- und/oder kraftschlüssig fixiert, dass der Magnet beim Trennen von Schalungswand und Betonteil zusammen mit dem Gehäuse von der Schalungswand entfernbar ist.

Die US5456373A der Firma DS Inc. publiziert am 10.10.1995 zeigt eine Abdeckplattenanordnung für einen Wandkasten. Die Baugruppe umfasst einen Rahmen, der die Öffnung umgibt, in der der Wandkasten montiert ist. Die Baugruppe umfasst auch eine Sicherheitsplatte, die über jeder elektrischen Schaltungsvorrichtung liegt und den Raum abdeckt, der von der elektrischen Schaltungsvorrichtung eingenommen wird. Die Baugruppe umfasst ferner eine dekorative Abdeckplatte welche unmittelbar im Inneren des Rahmens aufgenommen werden kann und mittels zusammengesetzter Magnetstreifen am Rahmen gehalten wird, sodass die Baugruppe frei von jeglichen Befestigungsmitteln zu sein scheint.

Die CH706106A2 der Kaiser GmbH publiziert am 30.09.2013 zeigt eine Installationsdose für elektrotechnische Anwendungen, bestehend aus einem Dosenkörper aus Kunststoff, die dafür geeignet ist in Wände von strahlengeschützten Räumen eingebaut zu werden, ohne den Strahlenschutz dieses Raumes zu gefährden. Der Dosenkörper ist mit einer Ausstattung, Auskleidung oder Umkleidung ausgebildet ist, die einen Schutz gegen Kernstrahlung, insbesondere Alpha-, Beta- und/oder Gammastrahlung bewirkt.

Die US20081 90638A1 der AMX LLC publiziert am 14.08.2008 zeigt eine Vorrichtung zur Montage eines Geräts in einer Wanddose, die ein im Wesentlichen flaches Vorderteil und eine Vielzahl von sich nach hinten erstreckenden Seitenteilen und einen im Wesentlichen offenen hinteren Teil und mindestens einen Magneten umfasst. Der vordere Abschnitt ist mit einem Gerät verbunden und die Grundplatte ist so konfiguriert, dass sie im Wesentlichen in einen an einer Wand angeordneten magnetisch eingreifenden Wandkasten eingesetzt werden kann. Jeder Magnet ist mit einem der mehreren Seitenteile verbunden. Mindestens ein Magnet ist so konfiguriert, dass er magnetisch an einer Innenwand des magnetisch erfassbaren Wandkastens angreift.

Diese Dosen sind aufgrund des verwendeten Magnetes, welcher an dem Deckel nach dem Entfernen der Schalung verbleibt, zwar vorteilhaft für den Arbeitsablauf des Installateurs, jedoch aufwendig und teuer zu fertigen. Eine Aufgabe der vorliegenden Erfindung ist es, eine Installationsdose zu zeigen, welche die dem Stand der Technik anhaftenden Probleme vermeidet.

### DARSTELLUNG DER ERFINDUNG

Diese Aufgabe wird durch die in dem unabhängigen Patentanspruch definierte Installationsdose gelöst. Die erfindungsgemässe Installationsdose umfasst einen Grundkörper, welcher einen Installationsraum umschliesst, der über eine Installationsöffnung von aussen zugänglich ist sowie mindestens ein Haltemittel, welches zumindest teilweise aus magnetisiertem Kunststoff besteht und zur Befestigung der Installationsdose an einer Metallschalung dient.

Weiter kann die Installationsdose ergänzend einen Deckel umfassen mit welchem die Installationsöffnung des Grundkörpers verschliessbar ist. Dieser kann mit Hilfe von mindestens einem Befestigungsmittel, welches am Deckel und/oder am Grundkörper angeordnet ist, mit dem Grundkörper wirkverbunden werden. Das mindestens eine Befestigungsmittel kann beispielsweise eine formschlüssige und/oder kraftschlüssige Wirkverbindung zwischen Deckel und Grundkörper herstellen. Das Befestigungsmittel, welches die Wirkverbindung zwischen dem Deckel und dem Grundkörper herstellt, sollte bevorzugterweise so ausgestaltet sein, dass die Befestigungskraft grösser ist als die Haltekraft mit der die Installationsdose mittels des Haltemittels an der Metallschalung angebracht ist. Auf diese Weise verbleibt der Deckel an der Installationsdose und nicht der Metallschalung, wenn die Metallschalung von der fertigen Betonoberfläche abgehoben wird und der zusätzliche Aufwand des Entfernens des Haltemittels, respektive des Deckels, von der Metallschalung entfällt.

Aus Herstellungsgründen ist es ebenfalls möglich, den Grundkörper mehrteilig auszugestalten. Die mindestens zwei Grundkörperteile können form- und/oder kraftschlüssig miteinander wirkverbunden werden. Vorzugsweise werden die mindestens zwei Grundkörperteile ineinander geschnappt was den Zusammenbau erleichtert. Mit Vorteil ist in diesem Fall ebenfalls ein Dichtmittel vorhanden, welches die mindestens zwei Grundkörperteile gegen eindringenden Beton von aussen abdichtet. Weitergehend kann der Grundkörper einen seitlichen Nebenkörper umfassen, welcher den vorhandenen Installationsraum vergrössert.

Vorzugsweise ist das mindestens eine Haltemittel am Deckel und/oder am Grundkörper angeordnet. Wenn der Grundkörper ebenfalls einen Nebenkörper umfasst, kann das mindestens eine Haltemittel ebenfalls an diesem angeordnet sein. Das magnetisierte Haltemittel kann an dem Deckel und/oder dem Grundkörper (respektive Nebenkörper) als separates Teil angebracht oder angeformt sein. Alternativ oder ergänzend dazu können der Grundkörper (respektive Nebenkörper) und/oder der Deckel ebenfalls zumindest bereichsweise aus magnetisiertem Kunststoff bestehen.

Die Installationsdose umfasst mindestens eine Dichtung, welche zur Abdichtung der Installationsdose gegenüber der Metallschalung dient. Die mindestens eine Dichtung kann zwischen Deckel und/oder Grundkörper und Metallschalung angeordnet sein und dient zum Abdichten eines Teilbereiches des Deckels und/oder Grundkörpers gegen Eindringen von Beton. Hierzu kann die Dichtung sich über den Grundkörper als auch den Deckel erstrecken. Der Teilbereich kann beispielsweise die Installationsöffnung und/oder das mindestens eine Haltemittel und/oder weitere potentielle Öffnungen, respektive Kabeleinführungen, umfassen. Für den Fall, dass der Teilbereich das Haltemittel umfasst, sorgt die umliegende Dichtung dafür, dass die Auflagefläche für das Haltemittel an der Metallschalung frei von Beton bleibt und die magnetische Haltekraft nicht im Laufe des Giessprozesses durch eindringenden Beton verringert wird. Alternativ oder ergänzend kann der Teilbereich auch eine potenzielle Öffnung in den Installationsraum umschliessen, welche an der Metallschalung anliegt. Diese potentielle Öffnung kann beispielsweise aus weichelastischem, leicht durchstossbarem Kunststoff bestehen, welche nach dem Aushärten des Betons und dem Entfernen der Metallschalung nachträglich geöffnet werden kann. Hierzu ist hilfreich, wenn dieser Teilbereich entsprechend abgedichtet und somit vor Verunreinigungen durch Betonreste geschützt ist. Vorzugsweise umgibt die Dichtung zumindest den Teilbereich der Installationsdose, in welchem die Installationsöffnung angebracht ist.

Für eine verbesserte Dichtwirkung kann es vorteilhaft sein, wenn Dichtungen, welche an der Metallschalung anliegen, aus magnetisiertem Kunststoff bestehen und somit als Teil des Haltemittels eine Haltekraft ausüben. Weiterhin kann die Dichtung zumindest bereichsweise aus weichelastischem (magnetisiertem) Kunststoff bestehen, der sich der Kontur besser anpasst und damit eine höhere Dichtwirkung erzielt. Es besteht z.B. die Möglichkeit die Dichtung aus einem Schaumstoff herzustellen, die mit einem Bereich aus magnetisiertem Kunststoff zusammenwirkt. Der Schaumstoff wird bei der Montage der Installationsdose an der Metallschalung gezielt deformiert und passt sich reversibel an die jeweilige abzudichtende Form an.

Neben der guten Formbarkeit zeichnet sich der Schaumstoff durch seine gute Temperaturbeständigkeit, Druckfestigkeit und der Fähigkeit Vibrationen abzudämpfen als ein potentiell vorteilhaftes Dichtungsmaterial aus.

Weiterhin ist das mindestens eine Haltemittel von einer Sollbruchstelle umgeben, mittels dieser das Haltemittel von der Installationsdose abtrennbar ist. Mit Vorteil kann durch das Abtrennen des Haltemittels an dieser Sollbruchstelle eine zusätzliche Öffnung zum Installationsraum geschaffen werden, welche zum Beispiel für eine Kabeldurchführung genutzt werden kann. Wenn eine Dichtung in dieser Variante vorhanden ist, ist diese vorteilhafterweise ausserhalb um die Sollbruchstelle herum platziert. Auf diese Weise wird eine saubere Kante der späteren Öffnung geschaffen, welche frei von Betonresten ist. Ebenso können auf diese Weise Betonablagerungen an der Sollbruchstelle vermieden werden, was ein Herauslösen des Haltemittels erleichtert.

In einer weiteren möglichen Variante kann das mindestens eine Haltemittel ergänzend oder alternativ dazu als Distanzhalter zwischen der Metallschalung und der Installationsdose dienen. Auch sind weitere, nicht magnetisierte Distanzhalter möglich, die gemeinsam mit dem Haltemittel, welches ebenfalls als ein Distanzhalter fungiert, eine Auflagefläche für die Installationsdose an der Metallschalung bilden.

Mit Vorteil wird die Installationsdose zusammen mit dem Haltemittel durch einen Spritzgiessprozess hergestellt. Dies kann durch einen zwei-Komponenten Spritzgiessprozess geschehen bei dem eine Komponente der herkömmliche Kunststoff ist und die zweite Komponente von dem magnetisierbaren Kunststoff gebildet wird. Die Magnetisierung des magnetisierbaren Kunststoffes wird hierbei vorteilhafterweise nach dem Spritzgiessen in einem weiteren Arbeitsschritt durchgeführt.

### KURZE BESCHREIBUNG DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer erfindungsgemässen Installationsdose in perspektivischer Ansicht;
- Fig. 2: Eine zweite Variante einer erfindungsgemässen Installationsdose mit einem Deckel in perspektivischer Ansicht;
- Fig. 3: Eine dritte Variante einer erfindungsgemässen Installationsdose mit einem Deckel in perspektivischer Ansicht;
- Fig. 4: Eine vierte Variante einer erfindungsgemässen Installationsdose mit zweigeteilten Grundkörper und Nebenkörper in perspektivischer Ansicht;
- Fig. 5: Eine fünfte Variante einer erfindungsgemässen Installationsdose mit Deckel in perspektivischer Ansicht;
- Fig. 6: Eine weitere Variante eines Deckels für eine erfindungsgemässe Installationsdose in perspektivischer Ansicht.

### BESCHREIBUNG DER AUSFÜHRUNGSFORMEN

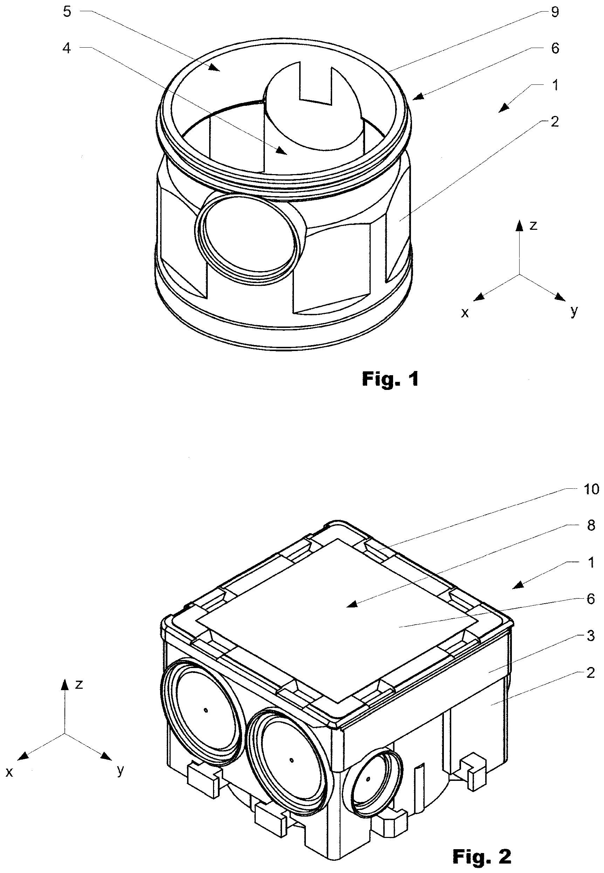

**Figur 1** zeigt eine erste Variante einer erfindungsgemässen Installationsdose 1 in perspektivischer Ansicht umfassend einen Grundkörper 3, welcher einen Installationsraum 4 umschliesst welcher über eine Installationsöffnung 5 von aussen zugänglich ist. Weiterhin ist ein Haltemittel 6 aus magnetisiertem Kunststoff vorhanden welches zur Befestigung der Installationsdose 1 an einer Metallschalung dient.

Das Haltemittel 6 ist in der gezeigten Variante ringförmig um die Installationsöffnung 5 und frontal an der Dose 1 in Anbringrichtung (z-Richtung) zur Metallschalung angeordnet. Andere Formgebungen des Haltemittels 6 sind ebenfalls denkbar. In der gezeigten Variante ist das Haltemittel 6 an dem Grundkörper 3 angeformt. Ebenfalls ist eine Dichtung 9 vorhanden, welche denjenigen Teil des Haltemittels 6 bildet, welcher frontal an die Metallschalung angelegt wird und aus weichelastischem, magnetisiertem Kunststoff geformt ist.

**Figur 2** zeigt eine zweite Variante einer erfindungsgemässen Installationsdose 1 in perspektivischer Ansicht mit einem Deckel 3, welcher die Installationsöffnung 5 temporär während des Giessens von Betons verschliesst. Der Deckel 3 ist mittels multipler Befestigungsmittel 10, welche um den Umfang des Grundkörpers 2 der Installationsdose 1 verteilt sind, angebracht. An den Seitenwänden des Grundkörpers 2 befinden sich weitere potentielle Öffnungen für den Zugang zum Installationsraum 4. In der gezeigten Variante ist ein Grossteil des Deckels 3 aus magnetisiertem Kunststoff gefertigt, sodass dieser ebenfalls das entsprechende Haltemittel 6 zur Befestigung an der Metallschalung bildet.

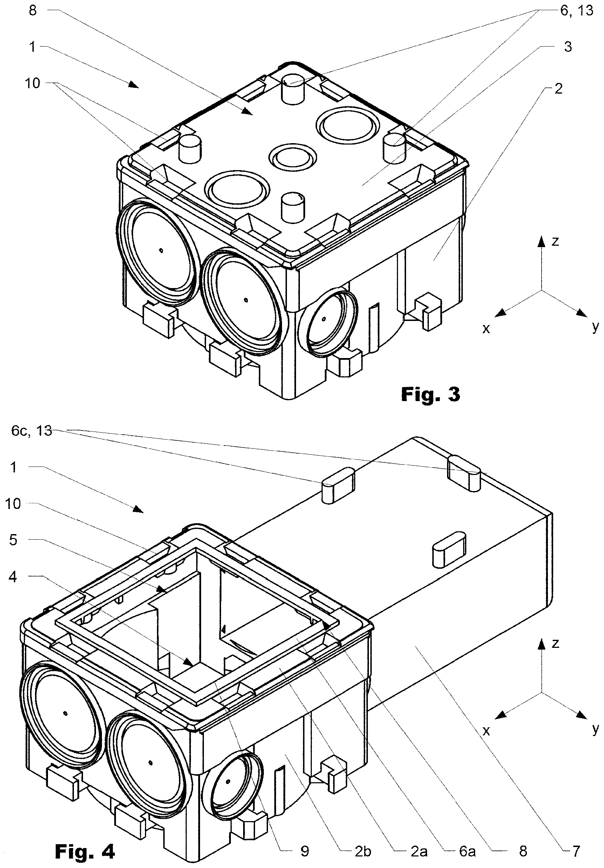

**Figur 3** zeigt eine dritte Variante einer erfindungsgemässen Installationsdose 1 in perspektivischer Ansicht mit einem Deckel 3 welcher über mehrere Haltemittel 6, die zugleich als Distanzhalter 13 zwischen der Metallschalung und der Installationsdose 1 dienen, verfügt. In der gezeigten Variante sind insgesamt vier Haltemittel 6 vorhanden, die gemeinsam eine Auflagefläche 8 für die Installationsdose 1 an der Metallschalung bilden, so dass die Installationsdose 1 definiert an der Schalung anliegt. Eine andere Anzahl von Haltemitteln 6 ist ebenfalls denkbar. Der gezeigte Deckel 3 ist über Befestigungsmittel 10 am Grundkörper befestigt.

**Figur 4** zeigt eine vierte Variante einer erfindungsgemässen Installationsdose 1 mit einem zweigeteilten Grundkörper 2, bei dem die Installationsöffnung 1 nicht durch einen Deckel 3 verschlossen ist. Der erste und der zweite Teil des Grundkörpers 2a, 2b sind über ein Schnappmechanismus miteinander wirkverbunden. Die Installationsöffnung 5, welche von aussen Zugang zu dem Installationsraum 4 ermöglicht, ist in dem ersten Teil des Grundkörpers 2a eingebracht. Weiterhin besitzt die gezeigte Variante der Erfindung einen Nebenkörper 7, welcher im Wesentlichen senkrecht zu einer Mittelachse des ersten und des zweiten Teiles des Grundkörpers 2a, 2b abgeht und dem Benutzer einen insgesamt grösseren Installationsraum 5 zur Verfügung stellt. Multiple Haltemittel 6a, 6c aus magnetisiertem Kunststoff sind an dem ersten Teil des Grundkörpers 2a sowie dem Nebenkörper 7 angeformt. Das Haltemittel 6a, welches an dem ersten Teil des Grundkörpers 2a angeformt ist, ist um die Installationsöffnung 5 orientiert. Der frontale Teil des Haltemittels 6a, welcher mit der Metallschalung in Berührung tritt, ist aus weichelastischerem magnetisiertem Kunststoff hergestellt und dient somit ergänzend als Dichtung 9. Somit wird in der gezeigten Variante die Installationsöffnung 5 gegen die Metallschalung durch die Dichtung 9 abgedichtet und gegen Eindringen von Beton geschützt. Die Haltemittel 6c, welche an dem Nebenkörper7 angebracht sind, dienen ergänzend als Distanzhalter 13 zwischen dem Nebenkörper 7 und der Metallschalung. Gemeinsam bilden die Haltemittel 6a, 6c eine Auflagefläche für die Installationsdose 1, die die besagte Installationsdose 1 in ihrer Lage positioniert und besser gegen Verrutschen während des Vergiessens von Beton sichert.

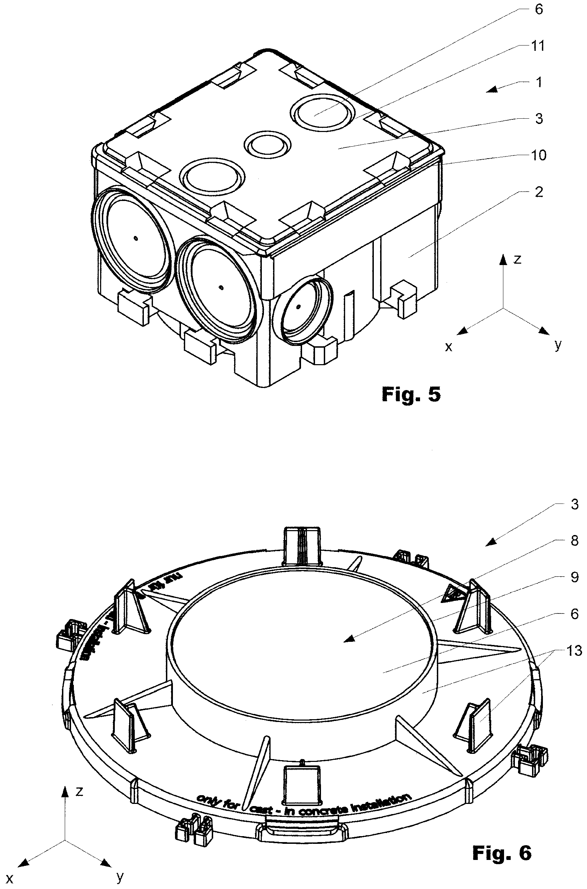

**Figur 5** zeigt eine fünfte Variante einer erfindungsgemässen Installationsdose 1 mit einem Grundkörper 2 und einem Deckel 3, welcher die Installationsöffnung 5 des Grundkörpers 2 verschliesst. Der Deckel 3 ist mittels multipler Befestigungsmittel 10 mit dem Grundkörper 2 der Installationsdose 1 wirkverbunden. Der Deckel 3 bildet bereichsweise eine Auflagefläche 8 für die Befestigung an der Metallschalung. Dieser Bereich des Deckels ist aus magnetisiertem Kunststoff geformt und fungiert somit als Haltemittel 6. Am Deckel 3 befinden sich in der gezeigten Variante weiterhin drei Teilbereiche, welche aus weichelastischem Material geformt sind. Diese Teilbereiche können ergänzend ebenfalls aus magnetisiertem Kunststoff geformt sein und Teil des Haltemittels 6 sein. Eine Variante, bei dem die Teilbereiche nicht magnetisiert sind, ist ebenfalls denkbar. Die Teilbereiche sind von einer jeweils umlaufenden Sollbruchstelle 11 von der restlichen Auflagefläche 8 abgegrenzt. Die Teilbereiche können einen Teil der Auflagefläche 8 bilden oder von dieser und der Metallschalung weg beabstandet sein. Die Teilbereiche können von dem Deckel 3 der Installationsdose 1 entlang der umlaufenden Sollbruchstellen 11 herausgetrennt werden, so dass mindestens eine Öffnung in den Installationsraum 4 geschaffen wird.

**Figur 6** zeigt eine weitere Variante eines Deckels 3 einer erfindungsgemässen Installationsdose 1. Der Deckel 3 umfasst ein zentrales ringförmiges Haltemittel 6, welches gleichzeitig als Distanzhalter 13 dient. Weitere, nicht magnetische Distanzhalter sind über den Umfang des Deckels 3 angeordnet. Das Haltemittel 6 umfasst weiterhin eine umlaufende Dichtung 9 welche zur Kontaktaufnahme mit der Metallschalung dient und den von der Dichtung eingeschlossenen Teilbereich der Installationsdose 1 gegen das Eindringen von Beton abdichtet. Zentral am Deckel 3, von dem Haltemittel 6 und der Dichtung 9 umgeben, befindet sich ein weichelastischer Teilbereich, welcher eine potentielle Öffnung zum Installationsraum 4 darstellt. Durch Durchstossen dieses Teilbereiches wird die Öffnung hergestellt und der Teilbereich entlang einer umlaufenden Sollbruchstelle 11 herausgetrennt. Der Teilbereich kann hierbei ebenfalls magnetisiert sein und zum Haltemittel gehören. Gemeinsam mit den Distanzhaltern 13 bildet das Haltemittel 6, respektive die Dichtung 9, eine Auflagefläche 8 für die Installationsdose 1 an der Metallschalung. Die umlaufende Dichtung 9 ist aus weichelastischem, magnetisiertem Kunststoff und wird während der temporären Befestigung an der Metallschalung komprimiert. Nach dieser Komprimierung bildet die Dichtung 9 mit Vorteil gemeinsam mit den nicht-magnetischen Distanzhaltern 13 eine Auflagefläche 8 an der Metallschalung.

### LISTE DER BEZUGSZEICHEN

- 1: Installationsdose
- 2: Grundkörper
- 3: Deckel
- 4: Installationsraum
- 5: Installationsöffnung
- 6: Haltemittel
- 7: Nebenkörper
- 8: Auflagefläche
- 9: Dichtung
- 10: Befestigungsmittel
- 11: Sollbruchstelle
- 13: Distanzhalter

## Patentansprüche

1. Installationsdose (1) für den Einbau in einer Betonoberfläche vor dem Betonieren umfassend
a. einen Grundkörper (2), welcher einen Installationsraum (4) umschliesst, der über eine Installationsöffnung (5) von aussen zugänglich ist,
b. sowie mindestens ein Haltemittel (6), welches zur Befestigung der Installationsdose (1) an einer Metallschalung dient,
c. eine Dichtung (9) zur Abdichtung der Installationsdose (1) gegenüber der Metallschalung, **dadurch gekennzeichnet, dass**
d. das Haltemittel (6) zumindest teilweise aus magnetisiertem Kunststoff besteht und von einer Sollbruchstelle (11) umgeben ist und von der Installationsdose (1) abtrennbar ist.

2. Installationsdose (1) gemäss Patentanspruch 1 **dadurch gekennzeichnet, dass** die Installationsdose (1) einen Deckel (3) umfasst mit welchem die Installationsöffnung (5) des Grundkörpers (2) verschliessbar ist.

3. Installationsdose (1) gemäss einem der vorangehenden Patentansprüche **dadurch gekennzeichnet, dass** der Grundkörper (2) mehrteilig ausgestaltet ist.

4. Installationsdose (1) gemäss einem der vorangehenden Patentansprüche **dadurch gekennzeichnet, dass** der Grundkörper (2) einen seitlichen Nebenkörper (7) umfasst.

5. Installationsdose (1) gemäss Patentanspruch 2 **dadurch gekennzeichnet, dass** das mindestens eine Haltemittel (6) am Deckel (3) oder am Grundkörper (2) angeordnet ist.

6. Installationsdose (1) gemäss Patentanspruch 2 **dadurch gekennzeichnet, dass** das der Grundkörper (2) und/oder der Deckel (3) zumindest bereichsweise aus magnetisiertem Kunststoff besteht.

7. Installationsdose (1) gemäss Patentanspruch 2 **dadurch gekennzeichnet, dass** die Dichtung (9) zwischen Deckel (3) und/oder Grundkörper (2) und Metallschalung angeordnet ist.

8. Installationsdose (1) gemäss Patentanspruch 7 **dadurch gekennzeichnet, dass** die Dichtung (9) Teil des Haltemittels (6) ist.

9. Installationsdose (1) gemäss einem der Patentansprüche 7 - 8 **dadurch gekennzeichnet, dass** die Dichtung (9) zumindest bereichsweise aus magnetisiertem Kunststoff besteht.

10. Installationsdose (1) gemäss einem der Patentansprüche 7 bis 9 **dadurch gekennzeichnet, dass** die Dichtung (9) die Installationsöffnung (4) umgibt.

11. Installationsdose (1) gemäss einem der Patentansprüche 7 bis 10 **dadurch gekennzeichnet, dass** die Dichtung (9) sich über den Grundkörper (2) und den Deckel (3) erstreckt.

12. Installationsdose (1) gemäss einem der vorangegangenen Patentansprüche **dadurch gekennzeichnet, dass** das durch das Abtrennen des Haltemittels (6) an der Sollbruchstelle (11) eine Öffnung (12) geschaffen wird.

13. Installationsdose (1) gemäss einem der vorangehenden Patentansprüche **dadurch gekennzeichnet, dass** das mindestens eine Haltemittel (6) als Distanzhalter (13) zwischen der Metallschalung und der Installationsdose (1) dient.

14. Installationsdose (1) gemäss einem der vorangehenden Patentansprüche **dadurch gekennzeichnet, dass** die Installationsdose (1) mit dem Haltemittel (6) durch Spritzgiessen hergestellt ist.

15. Installationsdose (1) gemäss Patentanspruch 14 **dadurch gekennzeichnet, dass** die Magnetisierung des magnetisierten Kunststoffes nach dem Spritzgiessen durchgeführt wird.

## Claims

1. Installation box (1) for installation in a concrete surface prior to the concreting process, comprising
a. a main body (2) which encloses an installation space (4) which is accessible from the outside via an installation opening (5),
b. and at least one holding means (6) which is used to fasten the installation box (1) to metal formwork,
c. a seal (9) for sealing the installation box (1) in relation to the metal formwork, **characterized in that**
d. the holding means (6) is composed at least partially of magnetized plastic and is surrounded by a predetermined breaking point (11) and can be separated from the installation box (1).

2. Installation box (1) according to Patent Claim 1, **characterized in that** the installation box (1) comprises a cover (3) with which the installation opening (5) of the main body (2) can be closed.

3. Installation box (1) according to either of the preceding patent claims, **characterized in that** the main body (2) is of multi-part design.

4. Installation box (1) according to one of the preceding patent claims, **characterized in that** the main body (2) comprises a lateral auxiliary body (7) .

5. Installation box (1) according to Patent Claim 2, **characterized in that** the at least one holding means (6) is arranged at the cover (3) or at the main body (2) .

6. Installation box (1) according to Patent Claim 2, **characterized in that** the main body (2) and/or the cover (3) is composed at least in certain regions of magnetized plastic.

7. Installation box (1) according to Patent Claim 2, **characterized in that** the seal (9) is arranged between the cover (3) and/or the main body (2) and the metal formwork.

8. Installation box (1) according to Patent Claim 7, **characterized in that** the seal (9) is part of the holding means (6).

9. Installation box (1) according to one of Patent Claims 7 - 8, **characterized in that** the seal (9) is composed at least in certain regions of magnetized plastic.

10. Installation box (1) according to one of Patent Claims 7 to 9, **characterized in that** the seal (9) surrounds the installation opening (4).

11. Installation box (1) according to one of Patent Claims 7 to 10, **characterized in that** the seal (9) extends over the main body (2) and the cover (3).

12. Installation box (1) according to one of the preceding patent claims, **characterized in that** the an opening (12) is created by separating the holding means (6) at the predetermined breaking point (11).

13. Installation box (1) according to one of the preceding patent claims, **characterized in that** the at least one holding means (6) serves as a spacer (13) between the metal formwork and the installation box (1).

14. Installation box (1) according to one of the preceding patent claims, **characterized in that** the installation box (1), together with the holding means (6), is produced by injection moulding.

15. Installation box (1) according to Patent Claim 14, **characterized in that** the magnetized plastic is magnetized after the injection-moulding process.

## Revendications

1. Boîte d'installation (1) destinée à être incorporée dans une surface en béton avant le bétonnage, ladite boîte comprenant
a. un corps de base (2) qui renferme un espace d'installation (4) qui est accessible de l'extérieur par une ouverture d'installation (5),
b. et au moins un moyen de tenue (6) qui sert à fixer la boîte d'installation (1) à un coffrage métallique,
c. une garniture d'étanchéité (9) destinée à étanchéifier la boîte d'installation (1) par rapport au coffrage métallique, **caractérisée en ce que**
d. le moyen de tenue (6) est au moins partiellement en matière synthétique magnétisée et est entouré d'un point de rupture (11) et peut être séparé de la boîte d'installation (1).

2. Boîte d'installation (1) selon la revendication 1, **caractérisée en ce que** la boîte d'installation (1) comprend un couvercle (3) avec lequel l'ouverture d'installation (5) du corps de base (2) peut être fermée.

3. Boîte d'installation (1) selon l'une des revendications précédentes, **caractérisée en ce que** le corps de base (2) est conçu en plusieurs parties.

4. Boîte d'installation (1) selon l'une des revendications précédentes, **caractérisée en ce que** le corps de base (2) comprend un corps secondaire latéral (7) .

5. Boîte d'installation (1) selon la revendication 2, **caractérisée en ce que** l'au moins un moyen de tenue (6) est disposé au niveau du couvercle (3) ou du corps de base (2).

6. Boîte d'installation (1) selon la revendication 2, **caractérisée en ce que** le corps de base (2) et/ou le couvercle (3) est au moins partiellement en matière synthétique magnétisée.

7. Boîte d'installation (1) selon la revendication 2, **caractérisée en ce que** la garniture d'étanchéité (9) est disposée entre le couvercle (3) et/ou le corps de base (2) et le coffrage métallique.

8. Boîte d'installation (1) selon la revendication 7, **caractérisée en ce que** la garniture d'étanchéité (9) fait partie du moyen de tenue (6).

9. Boîte d'installation (1) selon l'une des revendications 7 et 8, **caractérisée en ce que** la garniture d'étanchéité (9) est au moins par portions en matière synthétique magnétisée.

10. Boîte d'installation (1) selon l'une des revendications 7 à 9, **caractérisée en ce que** la garniture d'étanchéité (9) entoure l'ouverture d'installation (4).

11. Boîte d'installation (1) selon l'une des revendications 7 à 10, **caractérisée en ce que** la garniture d'étanchéité (9) s'étend sur le corps de base (2) et le couvercle (3).

12. Boîte d'installation (1) selon l'une des revendications précédentes, **caractérisée en ce qu'une** ouverture (12) est créée par séparation du moyen de tenue (6) au point de rupture (11).

13. Boîte d'installation (1) selon l'une des revendications précédentes, **caractérisée en ce que** l'au moins un moyen de tenue (6) sert d'entretoise (13) entre le coffrage métallique et la boîte d'installation (1).

14. Boîte d'installation (1) selon l'une des revendications précédentes, **caractérisée en ce que** la boîte d'installation (1) pourvue du moyen de tenue (6) est réalisée par moulage par injection.

15. Boîte d'installation (1) selon la revendication 14, **caractérisée en ce que** la magnétisation de la matière synthétique magnétisée est réalisée après le moulage par injection.
